Europäisches Patentamt

European Patent Office

Office européen des brevets

(19)

(11) Numéro de publication: **0 179 024**
**B1**

## (12) FASCICULE DE BREVET EUROPÉEN

(45) Date de publication du fascicule du brevet:
**17.01.90**

(21) Numéro de dépôt: **85810473.0**

(22) Date de dépôt: **17.10.85**

(51) Int. Cl. ⁴: **B 23 B  31/26,** B 23 B  31/20

(54) **Dispositif de montage d'une pince destinée au serrage d'une pièce dans une machine-outil.**

(30) Priorité: **18.10.84 CH 5002/84**

(43) Date de publication de la demande:
**23.04.86 Bulletin 86/17**

(45) Mention de la délivrance du brevet:
**17.01.90 Bulletin 90/03**

(84) Etats contractants désignés:
**AT CH DE FR GB IT LI NL**

(56) Documents cité:
**WO-A-83/03068
CH-A-512 963
DE-A-2 544 558
US-A-3 762 271
US-A-3 851 562**

(73) Titulaire: **Schäublin S.A.**

**CH-2735 Bévilard (CH)**

(72) Inventeur: **Nussbaumer, Ivan
Clos Velez 16
CH-2735 Malleray (CH)**

(74) Mandataire: **Rochat, Daniel Jean
Bovard SA Ingénieurs-conseils ACP Optingenstrasse
16
CH-3000 Bern 25 (CH)**

LIBERGRAF, STOCKHOLM 1990

## Description

Actuellement, le développement des machines-outils et en particulier des tours va vers la formation de cellules flexibles d'usinage qui exigent l'automatisation de diverses fonctions. Ainsi notamment pour réaliser des machines-outils capables de s'adapter rapidement à des opérations d'usinage effectuées sur différents genres de pièces on cherche à réaliser l'automatisation des changements des portes-pièces. Ces derniers sont en général soit du type des mandrins à mors, soit du type à pinces. Alors que le problème de l'automatisation des changements des mandrins à mors a déjà reçu diverses solutions, celui de l'automatisation des changements des pinces de serrage n'a pas encore pu être résolu jusqu'à maintenant de manière satisfaisante. Les pinces de serrage sont utilisées principalement dans les machines-outils qui usinent des pièces à partir d'un matériau brut en forme de barres. Cependant elles sont également utilisées dans des machines-outils telles que les tours travaillant en reprise. La grande vitesse de rotation des broches, de même que les exigences de haute précision dans le centrage et le positionnement des pièces constituaient des contraintes avec lesquelles les solutions possibles au problème posé n'étaient pas évidentes.

Le fascicule de demande internationale WO 83/03068 propose, pour permettre un changement automatique des pinces de serrage une construction dans laquelle la pince, à mâchoires élastiques, est liée d'une part à des moyens de manoeuvre qui assurent son ouverture et sa fermeture sur la pièce à usiner et d'autre part à des moyens d'accrochage qui la fixent ou la libèrent par rapport à la broche. Lorsqu'elle est libérée, un mécanisme de transfert peut la saisir et l'éloigner de la broche. Cette disposition est compliquée, coûteuse et délicate. En outre, son encombrement est tel qu'elle est inutilisable dans le cas ou l'on désire usiner des pièces sur des barres dont la machine sectionne des segments une fois leur usinage terminé, comme c'est le cas dans les tours automatiques.

La présente invention a pour but de remédier à ces défauts des dispositifs connus.

Elle a pour objet un dispositif indiqué à la revendication 1.

On va décrire ci-après, à titre d'exemple, une forme d'exécution du dispositif selon l'invention, adaptée à un tour à axe horizontal.

Au dessin annexé,

la fig. 1   est une vue en coupe axiale partielle de la première forme d'exécution montrant le cylindre de serrage dans deux positions différentes,

la fig. 2   est une vue frontale de la pince de serrage,

la fig. 3   une vue en coupe axiale semblable à la fig. 1, montrant un dispositif de préhension de la pince de serrage en position de préhension,

la fig. 4   est une vue semblable à la fig. 1, montrant le seconde forme d'exécution, et

la fig. 5   est une vue en élévation frontale d'une pince auxiliaire faisant partie de la seconde forme d'exécution.

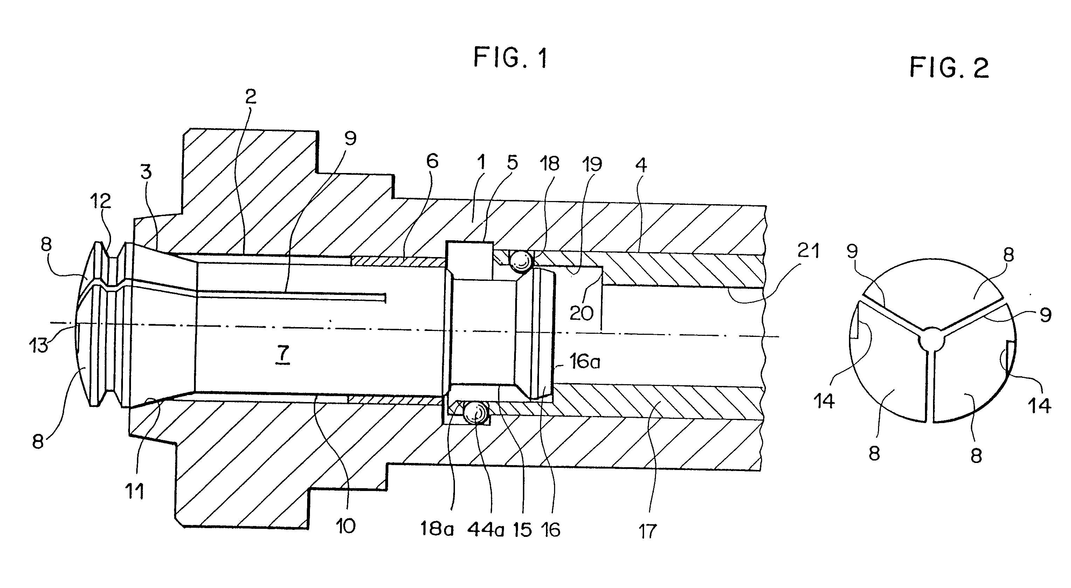

A la fig. 1 on voit la broche 1 d'un tour qui sera de préférence un tour agencé pour l'usinage de séries de pièces à partir d'un matériau en barres. A sa partie avant, la broche 1 présente un alésage 2 qui se termine vers l'avant par une partie tronconique 3 destinée à assurer le serrage de la pince, alors que vers l'arrière la broche 1 présente un alésage cylindrique 4 d'un diamètre légèrement plus grand que celui de l'alésage 2, et qui s'étend jusqu'à son extrémité arrière. Entre les deux alésages 2 et 4 est ménagée une gorge de profil rectangulaire 5 dont la fonction sera indiquée plus loin. A l'intérieur de l'alésage 2 est engagée une douille de guidage 6 de profil rectangulaire dont l'épaisseur et la longueur sont déterminées de manière à assurer le guidage et le centrage d'une pince 7, adaptée à serrer des barres d'un diamètre prédéterminé, ce diamètre correspondant au profil interne des trois mâchoires de serrage 8 (fig. 2) formées dans la pince 7 par les trois fentes axiales 9.

De façon usuelle, la pince 7 présente dans sa partie médiane une portée cylindrique limitée extérieurement par une surface 10, dont le diamètre est ajusté au diamètre interne de la douille 6 afin de pouvoir coulisser sans jeu à l'intérieur de cette douille. Vers l'avant, la portée 10 se continue par une surface tronconique 11 dont l'angle est semblable à celui de l'entrée tronconique 3 de la broche. Vers l'avant du cône de serrage 11, la pince 7 présente encore un prolongement formant une gorge 12 à flancs obliques et finalement un dôme 13 à la périphérie duquel sont ménagées deux entrées de repérage 14.

Vers l'extrémité arrière de la pince 7 on prévoit, à partir de l'extrémité de la portée 10, une gorge 15 à fond cylindrique dont le diamètre est plus petit que le diamètre de la portée 10, et qui est limitée vers l'arrière par une noix 16 dont les deux flancs sont de forme tronconique. Vers l'arrière, la noix 16 est limitée par un épaulement plan 16a perpendiculaire à l'axe de la broche 1.

La gorge 15 et la noix 16 constituent des éléments d'accrochage de la pince qui coopèrent avec des moyens de liaison correspondants que comporte un organe de transmission de force 17 capable de coulisser dans l'alésage 4 de la broche 1. L'organe 17 est une pièce cylindrique creuse qui est actionnée à l'extrémité arrière de la broche par un vérin pneumatique ou hydraulique (non représenté) dont la commande permet de déplacer l'organe 17 avec précision dans la broche. A son extrémité avant, le cylindre de serrage 17 présente une série d'ouvertures radiales 18 de forme cylindrique, se terminant au niveau d'une surface interne 19 du cylindre 17 par des cônes rentrants 18a capables de retenir des billes 44 logées dans les ouvertures 18. La surface interne 19 du cylindre de serrage 17 est ajustée au diamètre extérieur de la noix 16. Elle est limitée vers l'arrière par un épaulement de butée 20 de forme annulaire à partir duquel le cylindre de serrage présente vers l'arrière un alésage 21 de diamètre réduit par rapport au diamètre de la surface 19.

On voit que l'agencement décrit est tel qu'un simple mouvement d'avance du cylindre 17 vers l'avant a pour effet d'une part d'appuyer l'épaulement 20 contre la surface arrière 16a de la pince de serrage, et d'autre part de placer les ouvertures 18 au droit de la gorge 5 de sorte que les billes 44 peuvent dégager entièrement l'espace interne à la surface 19. En revanche, lors d'un mouvement de recul du cylindre 17, les billes 44 sont sollicitées par la surface d'alésage 4 de la broche 1 et viennent dans la position représentée à la partie supérieure de la fig. 1, de sorte qu'elles accrochent la noix 16 et tirent la pince de serrage vers l'intérieur de la broche.

La distance entre les perçages 18 et l'épaulement 20, de même que les dimensions de la noix 16 peuvent être déterminées de différentes manières. Dans un cas on peut obtenir que le mouvement d'avance du cylindre 17 ouvre la pince et la débloque simultanément alors que dans un autre cas on peut prévoir la possibilité d'ouvrir la pince par un premier déplacement, sans la débloquer.

On a constaté que la disposition décrite permettait d'assurer de façon entièrement automatique un changement de pinces sans que ni la fiabilité du serrage ni la précision du centrage des pièces ne soient diminuées. Le porte-à-faux supplémentaire créé par la gorge de préhension 12 peut être compensé par un positionnement correct de la douille 6. D'autre part, dans le cas où l'orientation de la pince de serrage par rapport au bâti de la broche doit être prédéterminée, les entrées de serrage 14 permettent d'assurer cette orientation, alors qu'il n'existe aucune liaison créant une orientation prédéterminée entre la broche et la pince.

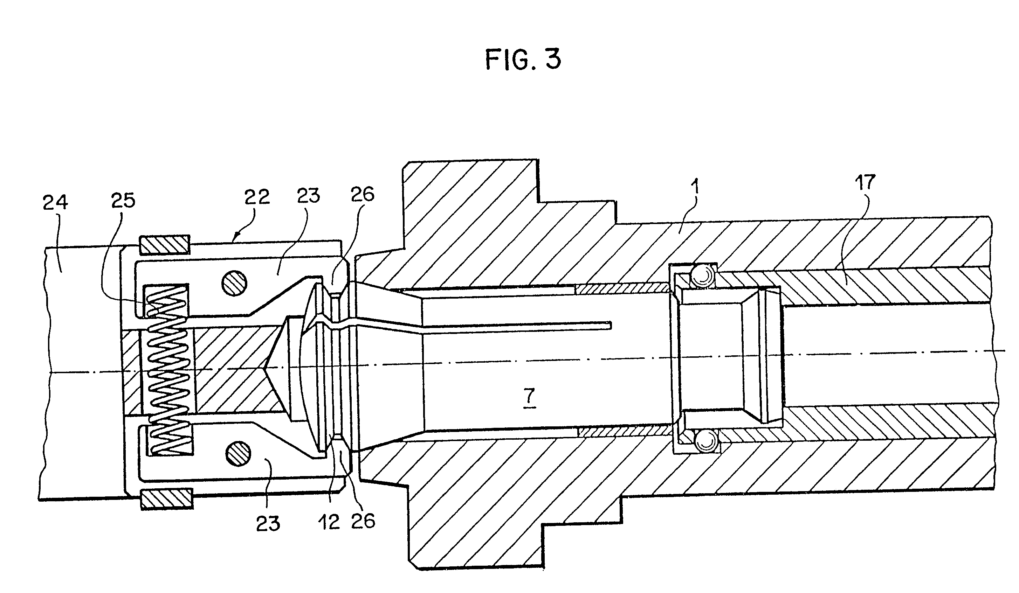

Pour l'élimination d'une pince et son remplacement par une autre d'une autre dimension, il suffit d'avancer le cylindre de serrage dans la position représentée à la fig. 3 et d'amener devant la pince un dispositif de préhension désigné de façon générale par 22 et qui comporte par exemple deux ou plusieurs mâchoires 23 logées dans des fentes d'un bras cylindrique 24 et sollicitées par un ressort 25. Les mâchoires 23 présentent à leurs extrémités des dents à flancs obliques 26 qui peuvent s'engager dans la gorge de préhension 12 de la pince 7. Il suffit ensuite de déplacer le dispositif 22 axialement pour que la pince soit automatiquement retirée de la broche et puisse être transportée à l'endroit désiré, le dispositif 22 étant alors capable de prendre une nouvelle pince et de l'amener à l'intérieur de la broche 1 en lieu et place de la pince 7. Le mouvement de serrage comme le mouvement de dégagement et d'engagement de la pince sont commandés par des déplacements purement axiaux du cylindre de serrage 17. Le dispositif 22 représenté à la fig.

3 ne représente qu'un exemple des dispositifs de préhension qui peuvent être utilisés pour retirer une pince comme la pince 7. D'autres moyens de préhension peuvent également être prévus dans ce but.

Le changement automatique de la pince se déroule de la façon suivante:

1. Arrêt de la broche en position quelconque ou fixe.
2. Desserrage de la pince par l'avance du système d'accrochage jusqu'à la butée 20 de décollage du cône de la pince.
3. Extraction de la pièce usinée, soit manuellement, soit par un robot ou un autre moyen.
4. Extraction de la pince, soit manuellement, soit par un robot ou un autre moyen. La pince peut être prise dans une orientation quelconque ou dans une orientation fixe assurée par le positionnement de la broche et par une des entrées de repérage de la pince.
5. Montage d'une nouvelle pince, soit manuellement, soit par un robot ou un autre moyen. La nouvelle pince peut être échangée dans une orientation quelconque ou dans une orientation fixe assurée par les entrées de repérage.
6. Mise en place d'une pièce-ébauche, soit manuellement, soit par un robot ou un autre moyen.
7. Serrage de la pince par recul du système d'accrochage commandé par un vérin pneumatique ou hydraulique.

Bien entendu, le positionnement axial de l'organe de transmission 17 dans le corps de broche 1 peut être assisté par un ressort agissant axialement.

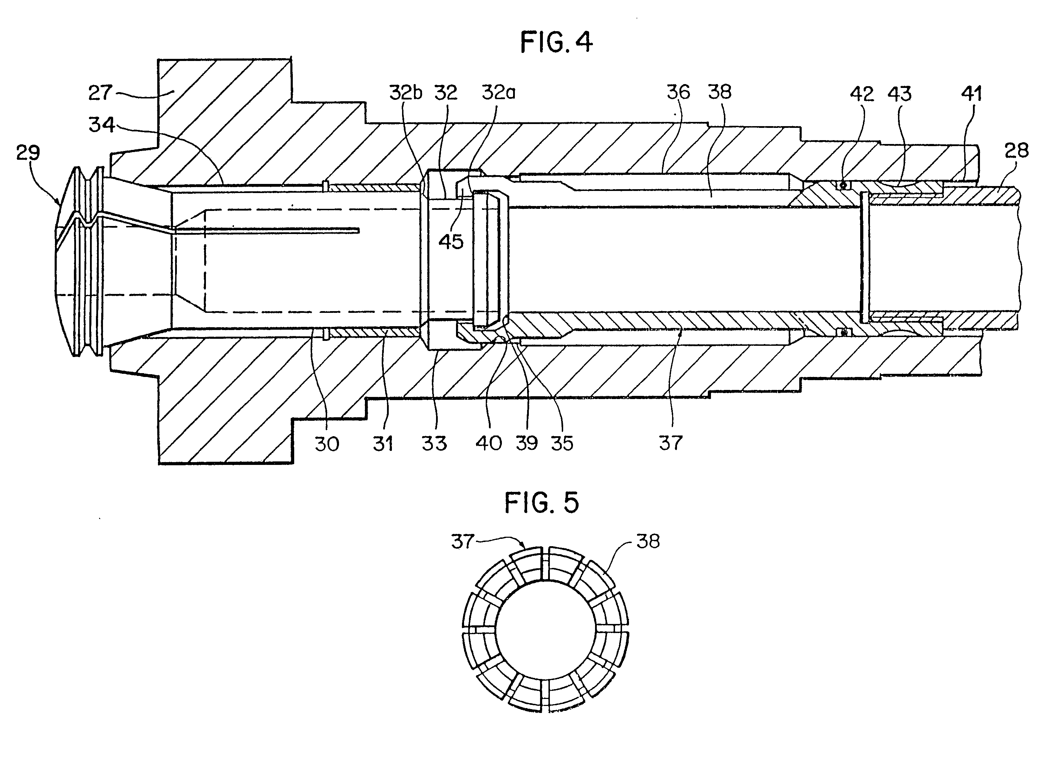

On obtient aussi les avantages et les caractéristiques de fonctionnement décrits ci-dessus avec le dispositif d'échange qui est représenté aux fig. 4 et 5. La broche 27 de cette seconde forme d'exécution est semblable à la broche 1. Elle sera supportée par des paliers à roulement dans le bâti de la poupée d'un tour à axe horizontal et munie de moyens d'entraînement permettant de la faire tourner avec toute la précision requise et, le cas échéant, de la bloquer brusquement ou de faire varier sa vitesse de rotation. De même, le cylindre de serrage 28 sera monté dans l'alésage de la broche, de façon à tourner avec elle tout en pouvant être entraîné en translation axialement sur la distance voulue pour commander l'ouverture et la fermeture de la pince. Cette dernière, désignée par 29, est du même type que la pince 7 des fig. 1 à 3. Toutefois, à l'extrémité arrière de sa surface cylindrique 30, guidée dans une douille 31 identique à la douille 6, elle présente simplement une gorge annulaire 32 dont le fond est cylindrique et dont les deux flancs 32a et 32b sont des surfaces tronconiques. L'angle d'ouverture de ces surfaces a presque 180° pour la surface 32b et environ 90° pour la surface 32a. En position de serrage de la pince 29, la gorge 32 se trouve en regard d'une gorge correspondante 33 ménagée dans la face interne de l'alésage 34 de la broche 27. A cette gorge fait suite, vers l'arrière de la broche, une courte portée 35 dont le diamètre interne est compris entre celui du fond de la gorge 33 et celui de l'alésage 34, puis une portion alésée 36 avec un diamètre d'alésage supérieur à celui de la portée 35.

Les moyens d'accrochage de la pince 29 au cylindre 26 sont constitués ici par une pince auxiliaire 37 de forme tubulaire, dont l'extrémité arrière est vissée sur l'extrémité avant du cylindre 28. Sur la plus grande partie de sa longueur, la pince 37 présente des fentes radiales qui déterminent un nombre relativement élevé de mâchoires élastiques 38, d'égale longueur. Comme on le voit à la fig. 5, 12 mâchoires sont prévues. Ces mâchoires présentent, comme on le voit à la fig. 4, à leur extrémité antérieure, des éléments de crochet 45 dirigés vers l'intérieur. Dans la position de la fig. 4, ces éléments de crochet sont engagés dans la gorge 32 de la pince 29. En effet, dans cette position, la portée extérieure 40 de chacune des mâchoires 38 est maintenue en position de serrage par la portée 35 de la broche 27. On comprend que si le cylindre 28 est commandé de manière à se déplacer vers l'avant, les épaulements 39 des mâchoires 38 poussent la pince 29 vers l'avant, ce qui détermine son ouverture.

En outre, les portées 40 viennent alors au droit de la gorge 33 de sorte que les mâchoires 38 s'ouvrent et libèrent la pince 29.

On notera encore que pour assurer le guidage de la pince auxiliaire 37 dans l'alésage arrière 41 de la broche 27, la pince présente une garniture d'étanchéité 42 et une creusure annulaire 43 ménagées dans sa partie arrière, laquelle est ajustée à l'alésage 41 de manière à coulisser sans frottement dans la broche.

L'extraction et l'introduction des pinces 29 s'effectuent comme dans la première forme d'exécution. La pince auxiliaire 37 étant en position avancée, la nouvelle pince est introduite dans la broche jusqu'à ce que sa face arrière bute sur l'épaulement 39. Il suffit alors de retirer le cylindre 28 pour que les mâchoires 38 s'accrochent au flanc 32a de la pince 29.

A la fig. 4, la distance entre l'épaulement de butée 39 et l'extrémité arrière de la pince 29 est manifestement plus courte que la longueur d'engagement des portées 40 sur la portée de serrage 35 de la broche. Cela signifie que lors du prochain mouvement d'avance du cylindre de transmission 28, la pince 29 sera poussée vers l'avant et décollée de son cône de serrage avant que les crochets 45 ne se dégagent latéralement de la gorge 32. La pince pourra ainsi atteindre une position axiale où elle est ouverte sans être libérée des moyens de liaison au cylindre de serrage. Dans le cas d'un tour automatique, par exemple, cette disposition assurera la pince contre le risque d'une extraction intempestive au moment de l'avance de la barre. En revanche, dès que le mouvement du cylindre 28 se poursuit jusqu'à un point où les portées 40 se trouvent entièrement au droit de la gorge 33, alors les mâchoires 38 se déploient élastiquement et les crochets 45 libèrent la pince qui peut alors être saisie par le dispositif de transfert. Le vérin de déplacement de l'organe 28 comprendra une commande permettant de régler avec précision ces mouvements. Ce vérin sera de préférence à double effet. On peut aussi prévoir un ressort de poussée agissant à l'encontre du vérin sur l'organe 28.

## Revendications

1. Dispositif de liaison à commande automatisable entre une pince échangeable et une broche mobile en rotation, dans une machine-outil, comprenant un corps de broche (1; 27) entraîné en rotation autour de son axe et, dans l'extrémité avant de corps de broche une pince de serrage (7; 29) un organe de transmission de force (17; 28) unique logé dans le corps de broche (1; 27), des moyens de liaison (18, 19, 44; 37) entre la pince (7; 29) et l'organe de transmission de force (17; 28), capables de réaliser l'accrochage et le décrochage de la pince par rapport à l'organe de transmission de force sous l'effet d'un déplacement axial de ce dernier dans le corps de broche, et une butée (20; 39) mobile avec l'organe de transmission de force et capable de coopérer avec l'extrémité arrière (16; 32a) de la pince, la pince ayant une extrémité avant munie de mâchoires élastiques (8; 38) séparées par des fentes axiales et une extrémité arrière conformée pour coopérer avec la butée, caractérisé en ce que la pince (7; 29) comporte en une pièce à son extrémité arrière un élément (16; 32a) en forme de nervure annulaire coopérant avec les dits moyens de liaison (18, 19, 44; 37), et entre les mâchoires élastiques et la nervure, une partie massive avec une surface cylindrique (10; 30) qui guide la pince axialement dans le corps de broche, et en ce que les mâchoires (8; 38) présentent chacune une portion de surface externe tronconique (11) qui coopère avec un alésage correspondant (3) du corps de broche et un prolongement qui s'étend hors du corps de broche et qui est pourvu extérieurement de moyens de préhension (12).

2. Dispositif selon la revendication 1, caractérisé en ce que la pince (7; 29) et l'organe de transmission de force (17; 28) ont une constitution tubulaire de manière à pouvoir agir sur une barre de matériau à usiner traversant la broche de bout en bout.

3. Dispositif selon la revendication 1, caractérisé en ce que les moyens de préhension (12) comportent une gorge annulaire coaxiale à la pince, à flancs obliques, ménagée dans le prolongement de chaque mâchoire.

4. Dispositif selon la revendication 1, caractérisé en ce que la pince présente à son extrémité avant une ou plusieurs entrées de repérage.

5. Dispositif selon la revendication 1, caractérisé en ce que les dits moyens de liaison sont du type à billes, ces dernières étant logées dans des ouvertures radiales ménagées dans le dit organe de transmission de force, et coopérant avec une noix qui limite vers l'arrière une gorge de la pince, une gorge de dégagement des billes étant ménagée dans l'alésage du corps de la broche.

6. Dispositif selon la revendication 1, caractérisé en ce que les moyens de liaison sont constitués par une pince auxiliaire, fixée à une extrémité avant de l'organe de transmission de force et présentant à son extrémité avant des mâchoires élastiques munies de crochets qui coopèrent avec la surface intérieure du corps de broche et la surface extérieure de l'extrémité arrière de la pince.

7. Dispositif selon la revendication 6, caractérisé en ce que les dites mâchoires de la pince auxiliaire présentent un profil extérieur qui coopère avec une gorge de dégagement et une portée de serrage du corps de broche, la pince présentant à son extrémité arrière une gorge d'engagement des dits crochets.

8. Dispositif selon l'une quelconque des revendications 1 à 7, caractérisé en ce que la butée de déplacement est un épaulement annulaire interne ménagé sur l'organe de transmission de force, en arrière des dits moyens de liaison et venant s'appuyer contre l'extrémité arrière de la pince pour la déplacer vers l'avant.

9. Dispositif selon la revendication 8, caractérisé en ce que les moyens de liaison et la dite butée sont agencés de manière qu'un mouvement d'avance de l'organe de transmission de force permet une position d'ouverture de la pince sans dégagement de celle-ci et une position ultérieure de dégagement.

10. Dispositif selon la revendication 8, caractérisé en ce que les dits moyens de liaison et la dite butée sont agencés de manière qu'un mouvement axial de l'organe de transmission de force provoque simultanément l'ouverture ou la fermeture de la pince et son dégagement ou engagement.

**Patentansprüche**

1. Verbindungsvorrichtung mit automatisierbarer Steuerung zwischen einer auswechselbaren Zange und einer drehbeweglichen Spindel, bestehend aus einem Spindelkörper (1, 27) welcher um seine Achse drehend, angetrieben ist, einer am vorderen Ende des Spindelkörpers angeordneten Spannzange (7, 29), einem einzigen im Spindelkörper (1, 27) vorhandenen Kraftübertragungsorgan (17, 28), zwischen der Zange (7, 29) und dem Kraftübertragungsorgan (17, 28) angeordneten Verbindungsmitteln (18, 19, 44, 37), welche befähigt sind das An- und Abkuppeln der Zange mit dem Kraftübertragungsorgan unter der Wirkung einer axialen Verschiebung des letzteren im Spindelkörper vorzunehmen, und einem mit dem Kraftübertragungsorgan beweglichen Anschlag (20, 39), welcher so ausgebildet ist, um mit dem hinteren Ende (16, 32a) der Zange zusammenzuwirken, deren vorderes Ende mit, durch axial verlaufende Nuten voneinander getrennten, elastischen Klemmbacken (8, 38) versehen ist und deren hinteres Ende zum Zusammenwirken mit dem Anschlag ausgebildet ist, dadurch gekennzeichnet, dass die Zange (7, 29) an ihrem hinteren Ende ein einstückiges Element (16, 32a) in der Form einer ringförmigen Rippe aufweist welches mit den genannten Verbindungsmitteln (18, 19, 44, 37) zusammenwirkt, dass zwischen den elastischen Klemmbacken und der Rippe ein massiver Bereich mit einer zylindrischen Oberfläche (10, 30) zum Führen der Zange in axialer Richtung im Spindelkörper vorhanden ist, und dass jede der Klemmbacken (8, 38) einen äusseren kegelstumpfartigen Oberflächenbereich (11), welcher mit einer korrespondierenden Bohrung (3) des Spindelkörpers zusammenwirkt, aufweist, und mit einer Verlängerung, welche als äusseres Greifmittel (12) vorgesehen ist und sich aus dem Spindelkörper heraus erstreckt, versehen ist.

2. Vorrichtung nach Anspruch 1, dadurch gekennzeichnet, dass die Zange (7, 29) und das Kraftübertragungsorgan (17, 28) eine rohrförmige Ausbildung derart aufweisen um auf einen die Zange Schritt für Schritt durchquerenden, zu bearbeitenden Materialstab einwirken zu können.

3. Vorrichtung nach Anspruch 1, dadurch gekennzeichnet, dass die Greifmittel (12) eine ringförmige und koaxial zur Zange angeordnete Kehle mit schrägen, in der Verlängerung von jeder der Klemmbacken angeordneten Flanken bilden.

4. Vorrichtung nach Anspruch 1, dadurch gekennzeichnet, dass die Zange an ihrem vorderen Ende ein oder mehrere Kennzeichnungseinlässe aufweist.

5. Vorrichtung nach Anspruch 1, dadurch gekennzeichnet, dass die genannten Verbindungsmittel in radial angeordneten Öffnungen des Kraftübertragungsorganes untergebrachte Kugeln sind, die mit einer Nuss, welche das hintere Ende einer Rille der Zange abschliesst, zusammenwirken, und dass eine Rille zum Loskuppeln der Kugeln in der Bohrung des Spindelkörpers angeordnet ist.

6. Vorrichtung nach Anspruch 1, dadurch gekennzeichnet, dass die Verbindungsmittel durch eine Hilfszange gebildet sind, welche an einem vorderen Ende des Kraftübertragungsorganes befestigt ist und an ihrem vorderen Ende mit Haken versehene elastische Klemmbacken aufweist, welche letzteren mit der inneren Oberfläche des Spindelkörpers und mit der äusseren Oberfläche des hinteren Zangenendes zusammenwirken.

7. Vorrichtung nach Anspruch 6, dadurch gekennzeichnet, dass die Klemmbacken der Hilfzange eine äussere Kontur aufweisen, welche mit einer Rille zum Loskuppeln und einem Klemmbereich des Spindelkörpers zusammenwirkt, wobei die Zange an ihrem hinteren Ende eine Eingriffsrille für die genannten Haken aufweist.

8. Vorrichtung nach einem der Ansprüche 1 bis 7, dadurch gekennzeichnet, dass der verschiebbare Anschlag ein am Kraftübertragungsorgan angeordneter innerer ringförmiger Ansatz ist, welcher sich hinter den genannten Verbindungsmitteln befindet und zum Drücken gegen das hintere Ende der Zange, um diese nach vorne zu verschieben, bestimmt ist.

9. Vorrichtung nach Anspruch 8, dadurch gekennzeichnet, dass die Verbindungsmittel und der genannte Anschlag so angeordnet sind, dass eine Vorwärtsbewegung des Kraftübertragungsorganes eine Öffnungstellung der Zange ohne Loskuppeln derselben und eine spätere Loskupplungsstellung erlaubt.

10. Vorrichtung nach Anspruch 8, dadurch gekennzeichnet, dass die genannten Verbindungsmittel und der genannte Anschlag so angeordnet sind, dass eine axiale Bewegung des Kraftübertragungsorganes zugleich das Öffnen oder das Schliessen sowie das Loskuppeln oder Einkuppeln der Zange bewirkt.

**Claims**

1. Device for connection with automatable control between an interchangeable collet and a rotating spindle, in a machine tool, comprising a spindle body (1; 27) driven rotatingly about its axis and, in the front end of the spindle body, a collet chuck (7; 29), a single force-transmitting part (17; 28) accommodated in the spindle body (1; 27), means for connection (18, 19, 44; 37) between the collet (7; 29) and the force-transmitting part (17; 28), capable of producing the hooking and unhooking of the collet relative to the force-transmitting part under the influence of an axial displacement of the latter in the spindle body, and a stop (20; 39) movable with the force-transmitting part and capable of co-operating with the rearward end (16; 32a) of the collet, the collet having a front end provided with elastic jaws (8; 38) separated by axial slots and a rearward end shaped for co-operating with the stop, characterized in that the collet (7; 29) comprises in one piece at its rearward end an element (16; 32a) in the shape of an annular rib co-operating with the said connection means (18, 19, 44; 37), and between the elastic jaws and the rib, a solid portion with a cylindrical surface (10; 30) which guides the collet axially in the spindle body, and in that each of the jaws (8; 38) has a frustoconical outer surface portion (11) which co-operates with a corresponding bore (3) of the spindle body and an extension which extends outside of the spindle body and which is provided on the outside with grasping means (12).

2. Device according to claim 1, characterized in that the collet (7; 29) and the force-transmitting part (17; 28) have a tubular structure so as to be able to act upon a bar of material to be machined passing through the spindle from one end to the other.

3. Device according to claim 1, characterized in that the grasping means (12) comprise an annular groove coaxial with the collet, having inclined sides, contrived in the extension of each jaw.

4. Device according to claim 1, characterized in that the collet has at its front end one or more orientation locating recesses.

5. Device according to claim 1, characterized in that the said connection means are of the ball type, these balls being accommodated in radial apertures contrived in the said force-transmitting part, and co-operating with a boss which bounds towards the rear a groove of the collet, a groove for disengaging the balls being contrived in the bore of the spindle body.

6. Device according to claim 1, characterized in that the connection means are made up of an auxiliary collet, fixed to a front end of the force-transmitting part and having at its front end elastic jaws provided with hooks which co-operate with the inside surface of the spindle body and the outside surface of the rearward end of the collet.

7. Device according to claim 6, characterized in that the said jaws of the auxiliary collet have an outside contour which co-operates with a disengagement groove and a chucking rim of the sP, the collet having at its rearward end a groove for engagement of the said hooks.

8. Device according to any one of the claims 1 to 7, characterized in that the displacement stop is an inner annular shoulder contrived on the force-transmitting part, to the rear of the said connection means and coming to press against the rearward end of the collet to move it forward.

9. Device according to claim 8, characterized in that the connection means and the said stop are arranged so that an advancing movement of the force-transmitting part permits an opening position of the collet without disengagement thereof and a subsequent position of disengagement.

10. Device according to claim 8, characterized in that the said connection means and the said stop are arranged so that an axial movement of the force-transmitting part simultaneously causes the opening or the closing of the collet and its disengagement or engagement.

FIG. 1

FIG. 2

# FIG. 3

EP 0 179 024 B1

FIG. 4

FIG. 5

EP 0 179 024 B1